Europäisches Patentamt

(19) European Patent Office

Office européen des brevets

(11) Publication number: **0 206 162**
**B1**

(12) **EUROPEAN PATENT SPECIFICATION**

(45) Date of publication of patent specification: **15.03.89**

(21) Application number: **86108082.8**

(22) Date of filing: **13.06.86**

(51) Int. Cl.⁴: **G 21 C 3/32,** G 21 C 3/16

(54) **Nuclear fuel assembly with bow-resistant structural members.**

(30) Priority: **26.06.85 US 748855**

(43) Date of publication of application:
**30.12.86 Bulletin 86/52**

(45) Publication of the grant of the patent:
**15.03.89 Bulletin 89/11**

(84) Designated Contracting States:
**BE DE FR GB IT SE**

(56) References cited:
**FR-A-2 014 010**
**FR-A-2 045 788**
**US-A-3 791 466**
**US-A-4 106 985**

(73) Proprietor: **WESTINGHOUSE ELECTRIC**
**CORPORATION**
**Westinghouse Building Gateway Center**
**Pittsburgh Pennsylvania 15222 (US)**

(72) Inventor: **Wilson, John Francis**
**3560 Meadowgate Drive**
**Murrysville Pennsylvania 15668 (US)**
Inventor: **Gjertsen, Robert Kenneth**
**126 Penn Lear Drive**
**Monroeville Pennsylvania 15146 (US)**
Inventor: **Ferrari, Harry Max**
**144 West Swissvale Avenue**
**Pittsburgh Pennsylvania 15218 (US)**

(74) Representative: **Patentanwälte Dipl.-Ing. R.**
**Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for nuclear reactors and, more particularly, to a fuel assembly especially for use in a non-control rod location of a nuclear reactor core.

The cores of nuclear reactors conventionally include a plurality of fuel assemblies. In a typical pressurized water reactor (PWR), all fuel assemblies are geometrically alike. Each fuel assembly includes a multiplicity of fuel rods held in an organized array by grids spaced along the fuel assembly. The grids are attached to a plurality of control rod guide thimbles. Top and bottom nozzles of the fuel assembly are secured to opposite ends of the control rod guide thimbles which extend above and below the opposite ends of the fuel rods. The guide thimbles together with the top and bottom nozzles rigidly attached thereto form the structural skeleton of the fuel assembly.

The fission process created by nuclear fuel contained in the fuel rods is typically controlled by means of control rods positioned for movement in the guide thimbles of the fuel assembly. However, not all of the fuel assembly locations of a reactor core use control rods, only about one-third of the fuel assemblies being in control rod locations. Nevertheless, since heretofore all PWR fuel assemblies have been constructed to be alike geometrically, the fuel assemblies for non-control rod locations have been the same as those for control rod locations.

In departure from this prior practice of constructing all PWR fuel assemblies alike, a separate fuel assembly design has been proposed recently for use at non-control rod locations. This separate fuel assembly includes a bottom nozzle, a top nozzle, elongate structural members, such as hollow tie rods which connect the top and bottom nozzles together and at least some of which contain a burnable poison, and axially spaced transverse grids which are attached to the structural members and support an array of fuel rods. The top and bottom nozzles are attached to the longitudinal structural members by suitable means, such as screw-thread connections. One important difference between this previously proposed fuel assembly for non-control rod locations and conventional fuel assemblies for non-control rod as well as control-rod locations lies in the design of the longitudinal structural members which interconnect the top and bottom nozzles to form the structural skeleton of the assembly. In a conventional PWR fuel assembly, the structural members are the hollow guide thimble tubes which are open at the top and closed at the bottom (except for small holes for coolant flow). These guide thimble tubes are positioned within the fuel assembly so as to align with the control rods which are movable therein during reactor operation. On the other hand, in the non-control rod fuel assembly intended for use in non-control rod core locations, the structural members, although likewise in the form of tubes are not designed or intended to receive control rods but are available for different functional as well as structural uses.

Functionally, such structural member may contain burnable absorber material, e.g. a suitable compound of boron, such as used in modern reactors as an additional means for controlling reactivity, especially at the beginning of life of the nuclear fuel. Structurally, the elongate tube constituting the structural member is closed at each end by end plugs which are welded to the tube and preferably are made of Zircaloy-4. A spring holds the absorber material in place within the tube and provides a plenum for accumulating helium gas released when a neutron interacts with a boron atom. For assembling the non-control rod structural members into the fuel assembly, the tubes must be empty and open at one end. After the grids are bulge-fitted to the tubes, the absorber material and spring are loaded into the tubes whereupon the remaining end plugs are welded in place. The fuel rods are then loaded, and the top and bottom nozzles are bolted on.

In the non-control rod fuel assembly, there are eight structural members whereas in the conventional control rod fuel assembly there are twenty-four guide thimbles. Thus, the former can have sixteen more fuel rods than the latter.

The use of non-control rod fuel assemblies having a design such as described above has created an opportunity to overcome a problem experienced for a long time and which affects the overall performance of PWR fuel assemblies, namely, the problem of fuel assembly bow due to the transmission of axial force through the hold-down springs of the top nozzle of the fuel assembly, the adapter plate of the top nozzle, the upper end plug of the longitudinal structural member, the cladding tube of the latter, and its lower end plug to the adapter plate of the bottom nozzle. The axial force thus transmitted places the cladding tube in a state of compression which can result in permanent fuel assembly bow.

It is the principal object of the invention to provide means for reducing compressive stressing of non-control rod-receiving longitudinal structural members of nuclear fuel assemblies.

Basically, the solution proposed by the invention to the problem of fuel assembly bow involves preloading the cladding tube of the structural member in tension. Preloading the tube in tension requires the central part thereof to be loaded in compression. The material used for loading the tube in compression must be creep-resistant, i.e. it must not be subject to thermal or irradiation-induced creep as, otherwise, the structure will creep to a permanently bowed position.

Accordingly, the invention resides in a fuel assembly for use in a nuclear reactor core, said fuel assembly including top and bottom nozzles and a plurality of longitudinal structural members extending between and attached to said nozzles so as to consolidate the fuel assembly into an integral unitary structure, said structural members having an axial load transmitted thereto through the unitary structure of the fuel assembly when in the reactor core, and at least some of said structural members each including an elongate hollow cladding tube and means secured the opposite ends of the tube for hermetically sealing the tube and for attaching it to the top and bottom nozzles, characterized in that said cladding tube contains a quantity of creep-resistant material, and pre-tensioning means for applying a predetermined compressive load to said creep-resistant material and reacting said load so as to preload said cladding tube in a state of pre-tension having a magnitude sufficient to substantially counteract said axial load and thereby reduce compressive stress in said cladding tube.

Preferably, the creep-resistant material is a ceramic material, such as zirconium dioxide, in pellet form, the ceramic pellets being coated with a burnable absorber material. In one embodiment of the invention, the pre-tensioning means is an elongate bellows-type device positioned within the cladding tube between one end thereof and the creep-resistant material, and internally pressurized to create a predetermined axial force which places the creep-resistant pellets in compression and the tube in said state of pre-tension. The remainder of the tube, i.e. the space not occupied by the creep-resistant material and the pre-tensioning means, may be pressurized. In an alternative embodiment, the pre-tensioning means is an arrangement of Belleville springs positioned within the tube between one end thereof and the creep-resistant material so as to create the predetermined axial force which places the creep-resistant material in compression and the tube in said state of pre-tension. The Belleville springs in the arrangement thereof are both stacked in parallel and in series.

Preferred embodiments of the invention will now be described, by way of example only, with reference to the accompanying drawings, in which:

Fig. 1 is an elevational view, with parts broken away for clarity and partially in section, of a non-control rod fuel assembly embodying the invention;

Fig. 2 is an enlarged fragmentary view, in vertical section, of the fuel assembly of Fig. 1, showing one of its longitudinal structural members pre-tensioned in one manner;

Fig. 3 is a view similar to Fig. 2 but illustrating an alternative way of placing a structural member of the fuel assembly in pre-tension; and

Fig. 4 is a load-stress diagram comparing a longitudinal structural member of the earlier design with one embodying the present invention, and demonstrating that the pre-tensioned member according to the invention has much lower compressive stress for a given axial load than the non-pretensioned member of the earlier design.

In the following description, like reference characters designate like or corresponding parts throughout the several views of the drawings, and terms such as "forward", "rearward", "left", "right", "upwardly", "downwardly", and the like are employed as words of convenience not to be construed as limiting terms.

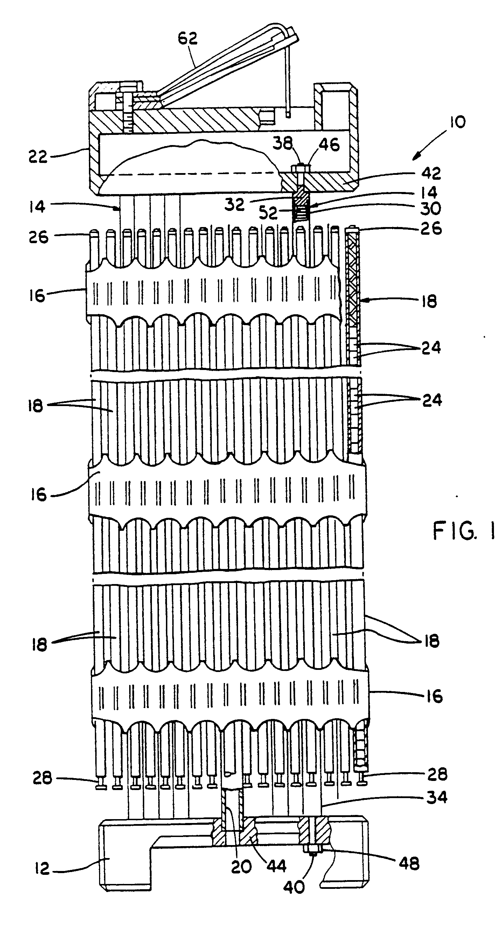

Referring now to the drawings, and particularly to Fig. 1, there is shown, in vertically foreshortened form, a fuel assembly 10 adapted for use in a non-control rod location of a nuclear reactor core (not shown) and comprising a lower end structure or bottom nozzle 12 for supporting the assembly on the lower core plate (not shown) in the reactor core, several elongate structural members 14 which at their lower ends are attached to the bottom nozzle 12 and which project upwardly therefrom, a plurality of transverse grids 16 axially spaced along the structural members 14, an organized array of elongate fuel rods 18 transversely spaced and supported by the grids 16, an instrumentation tube 20 located in the center of the assembly, and an upper end structure or top nozzle 22 attached to the upper ends of the structural members 14. These parts thus arranged form an integral unit capable of being conventionally handled without damaging the assembly parts.

Each of the fuel rods 18 contains pellets 24 of fissile material and is closed at its opposite ends by means of end plugs 26 and 28. When in use, a liquid moderator-coolant such as water, or water containing boron, is pumped upwardly along the fuel rods 18 of the fuel assembly 10 in order to extract therefrom heat for the production of useful work.

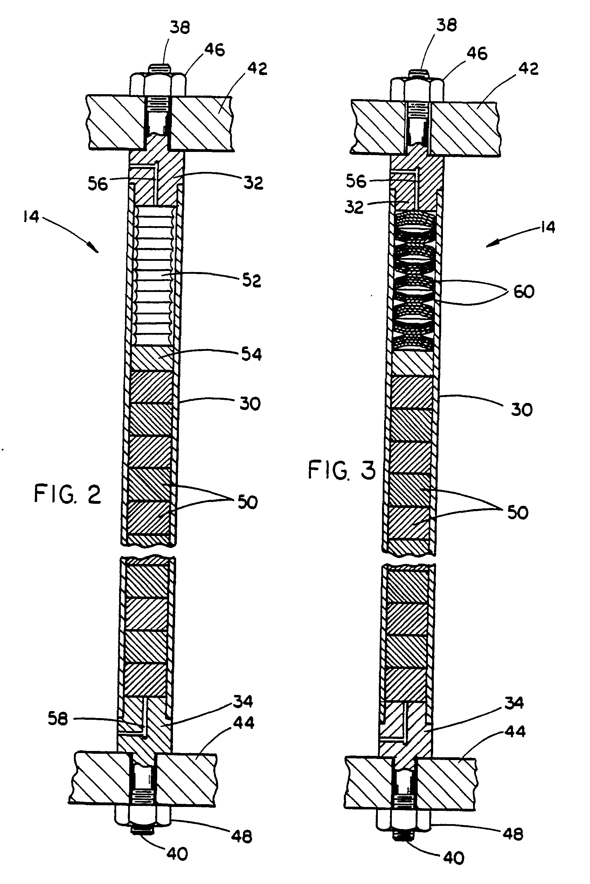

Turning now to Figs. 2 and 3, they illustrate two embodiments of the invention. As initially indicated herein, the fuel assembly 10 is designed to be used at a non-control rod core location in which there are no control rods operatively associated with the assembly. As distinct from the control-rod guide thimbles of fuel assemblies employed at control-rod core locations, into which control rods extend through the upper ends and coolant flow is introduced through the lower ends, the longitudinal structural members 14 of the non-control rod fuel assembly 10 have their opposite ends sealed.

In each of the two embodiments shown in Figs. 2 and 3, the longitudinal structural member 14 comprises an elongate hollow cladding tube 30 closed at its opposite ends by means of end plugs 32 and 34 welded to the tube. The tube and the end plugs preferably consist of Zircaloy-4. The upper and lower end plugs 32, 34 have thereon threaded studs 38 and 40, respectively, which extend through openings in the adapter plates 42, 44 of the top and bottom nozzles 22, 12 and have nuts 46, 48 threadedly engaged therewith and tightened to rigidly secure the opposite ends of the structural member 14 to the respective nozzles 22, 12. Typically, the tubes 30 of the structural members 14 have a substantially greater wall thickness than the tubes of control-rod guide thimbles and there are substantially fewer structural members 14 in each non-control rod fuel assembly 10 than there are guide thimbles in each control-rod fuel assembly. The remaining locations in the non-control rod fuel assembly 10 which correspond to those occupied by guide thimbles in the control rod fuel assembly are occupied by fuel rods 18. For example, there are typically twenty-four guide thimbles in the control-rod fuel assembly, whereas in the non-control rod fuel assembly 10 there are only eight structural members 14 so that the sixteen remaining locations can be filled with additional fuel rods.

In accordance with the present invention, each structural member 14 is made resistant to bowing by preloading its cladding tube 30 in pre-tension. In order to preload the tube 30 in tension, the central portion thereof must be loaded in compression. The material loaded in compression must not be subject to thermal or irradiation-induced creep or it will creep to a permanently bowed condition. Thus, the tube 30 of the member 14 contains a material 50, preferably in the form of pellets stacked in the tube 30, which is resistant to thermal or irradiation-induced creep. Ceramic materials, such as zirconium dioxide or alumina, are typical examples of materials which are very creep-resistant and which can also be coated with a burnable absorber material, such as boron carbide.

For applying a compressive load to the ceramic pellets 50 and reacting the load in such a way as to load the tube 30 in pre-tension, either one of the two kinds of pre-tensioning means depicted in Figs. 2 and 3 can be used.

In Fig. 2, the pre-tensioning means is a bellows type device, generally designated 52, disposed within the tube 30 in an upper plenum region of the structural member 14. The bellows device 52 is connected, e.g. welded, to the upper end plug 32 and is radially supported by the cladding tube 30, with the bottom end 54 of the device 52 pressing against the stack of pellets 50. A pressurizing passage 56 in the upper end plug 32 allows the bellows device 52 to be internally pressurized. After pressurization, the passsage 56 is sealed and an axial force then exists in the bellows device 52 which places the pellet stack 50 in compression and places the tube 30 in pre-tension.

A bellows pressure of approximately 40 atmospheres (cold) will provide an axial force of about 54 kg during hot operating conditions. It should be noted that achievement of acceptable fuel assembly bow does not require zero axial stress so that a lower pressure could be used. If desired, the inside of the member tube 30, in the pellet region, can be pressurized through a passage 58 in the lower end plug 34. It should be noted that if this is pressurized, it counteracts the pressure in the bellows so that the bellows pressure must be increased accordingly.

In the alternative embodiment shown in Fig. 3, the pre-tensioning means is in the form of an arrangement of Belleville springs 60. The Belleville springs 60 can be stacked in parallel, as shown, to obtain a greater deflection range.

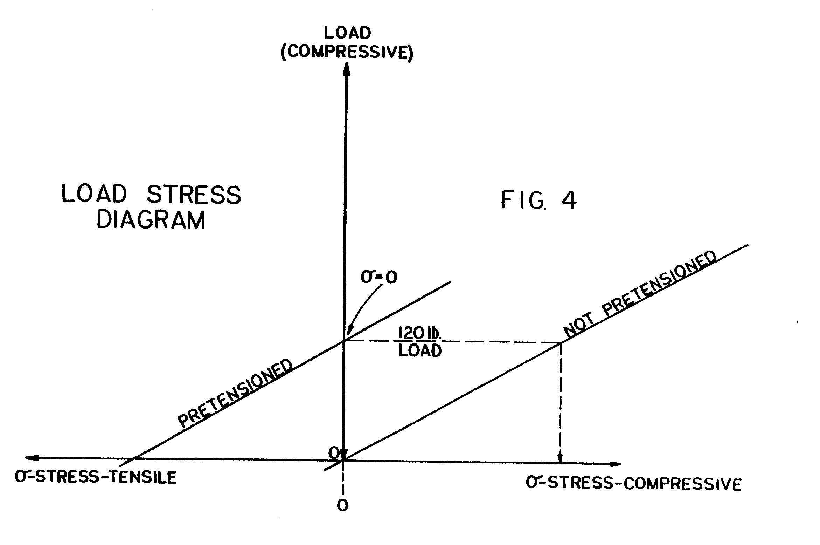

Regardless of which embodiment of the pretensioning means is used, its function is to apply a predetermined compressive load to the creep-resistant material 50 in the member 14 and to react the load so as to preload the tube 30 in a state of pre-tension. The pre-tension should be of a magnitude sufficient to substantially counteract an axial load typically transmitted through the unitary structure of the fuel assembly 10 when installed in the reactor core, and thereby substantially reduce the compressive stress occurring in the tube 30 of the structural member 14 when the core plate compressive forces are applied to the hold-down springs 62 (Fig. 1) of the fuel assembly 10. This is shown in Fig. 4 which is a load-stress diagram comparing a structural member according to the invention with a structural member of the earlier design initially mentioned herein, and with all cladding and dimensional parameters being the same in both cases. The diagram shows that the pre-tensioned tube of the structural member embodying the invention has a much lower compressive stress for a given axial load than the non-pretensioned tube of the earlier design.

## Claims

1. A fuel assembly for use in a nuclear reactor core, said fuel assembly including top and bottom nozzles and a plurality of longitudinal structural members extending between and attached to said nozzles so as to consolidate the fuel assembly into an integral unitary structure, said structural members having an axial load transmitted thereto through the unitary structure of the fuel assembly when in the reactor core, and at least some of said structural members each including an elongate hollow cladding tube and means secured to the opposite ends of the tube for hermetically sealing the tube and for attaching it to the top and bottom nozzles, characterized in that said cladding tube (30) contains a quantity of creep-resistant material (50), and pre-tensioning means (52; 60) for applying a predetermined compressive load to said creep-resistant material (50) and reacting said load so as to preload said cladding tube (30) in a state of pre-tension having a magnitude sufficient to substantially counteract said axial load and thereby reduce compressive stress in said cladding tube (30).

2. A fuel assembly according to claim 1, characterized in that said creep-resistant material (50) is a ceramic material in pellet form.

3. A fuel assembly according to claim 2, characterized in that said ceramic material (50) is zirconium dioxide.

4. A fuel assembly according to claim 2 or 3, characterized in that said ceramic material (50) is coated with a burnable absorber material.

5. A fuel assembly according to claim 1, 2, 3 or 4, characterized in that said pre-tensioning means is an elongate bellows-type device (52) positioned within the cladding tube (30) between one end thereof and said creep-resistant material (50), said bellows-type device (52) being internally pressurized to create a predetermined axial force which places said creep-resistant material (50) in compression and places the tube (30) in said state of pre-tension.

6. A fuel assembly according to claim 1, 2, 3 or 4, characterized in that said pre-tensioning means comprises an arrangement of Belleville springs (60) positioned within the cladding tube (30) between one end thereof and said creep-resistant material (50) so as to create a predetermined axial force which places said creep-resistant material (50) in compression and places said tube (30) in said state of pre-tension.

7. A fuel assembly according to claim 6, characterized in that said Belleville springs (60) in said arrangement thereof are stacked in parallel and in series.

8. A fuel assembly according to any one of the preceding claims characterized in that the cladding tube (30) is internally pressurized.

## Patentansprüche

1. Brennelement zum Einsatz in einem Kernreaktorkern, wobei das Brennelement obere und untere Mundstücke und eine Mehrzahl von dazwischen verlaufenden und an den Mundstücken befestigten länglichen Konstruktionsteilen zur Ausbildung des Brennelements als einheitliche integrale Konstruktion aufweist, wobei weiter die genannten Konstruktionsteile beim Einsatz im Reaktorkern eine durch die einheitliche Konstruktion des Brennelements auf sie übertragene Axiallast aufnehmen, und wobei mindestens einige der genannten Konstruktionsteile jeweils ein längliches hohles Hüllrohr und an beiden Enden des Rohres befestigte Mittel zum hermetischen Verschließen des Rohres und zu seiner Befestigung an den oberen und unteren Mundstücken aufweisen, dadurch gekennzeichnet, daß das Hüllrohr (30) ein Quantum kriechfesten Materials (50) und Vorspannmittel (52, 60) zum Anlegen einer vorgegebenen Druckkraft auf das kriechfeste Material (50) und zum Aufnehmen der genannten Last derart aufweist, daß das Hüllrohr (30) in einem Zustand der Vorspannung mit einer ausreichenden Größe vorbelastet wird, um der genannten Axiallast im wesentlichen entgegenzuwirken und dadurch Druckspannungen in dem Hüllrohr (30) zu verringern.

2. Brennelement nach Anspruch 1, dadurch gekennzeichnet, daß das kriechfeste Material (50) ein Keramikmaterial in Tablettenform ist.

3. Brennelement nach Anspruch 2, dadurch gekennzeichnet, daß das Keramikmaterial (50) Zirkoniumdioxid ist.

4. Brennelement nach Anspruch 2 oder 3, dadurch gekennzeichnet, daß das Keramikmsaterial (50) mit einem abbrennbaren Absorbermaterial überzogen ist.

5. Brennelement nach Anspruch 1, 2, 3 oder 4, dadurch gekennzeichnet, daß die Vorspannmittel eine längliche balgartige Vorrichtung (52) aufweisen, die innerhalb des Hüllrohrs (30) zwischen dessen einem Ende und dem kriechfesten Material (50) angeordnet ist, wobei die balgartige Vorrichtung 52) innendruckbeaufschlagt ist, um eine vorgegebene Axialkraft zu erzeugen, welche das kriechfeste Material (50) unter Druck setzt und das Rohr (30) in den genannten Zustand der Vorspannung versetzt.

6. Brennelement nach Anspruch 1, 2, 3 oder 3, dadurch gekennzeichnet, daß die Vorspannmittel eine Anordnung von Tellerfedern (60) aufweisen, die in dem Hüllrohr (30) zwischen dessen einem Ende und dem kriechfestem Material (50) angeordnet ist, um eine vorgegebene Axialkraft zu erzeugen, welche das kriechfeste Material (50) unter Druck setzt und das Rohr (30) in dem Zustand der Vorspannung versetzt.

7. Brennelement nach Anspruch 6, dadurch gekennzeichnet, daß die Tellerfedern (60) dergenannten Anordnung parallel und in Reihe miteinander gestapelt sind.

8. Brennelement nach einem der vorhergehenden Ansprüche, dadurch gekennzeichnet, daß das Hüllrohr (30) innendruckbeaufschlagt ist.

## Revendications

1. Assemblage combustible destiné à être utilisé dans un coeur de réacteur nucléaire, ledit assemblage combustible comprenant des embouts supérieur et inférieur et une pluralité d'organes structuraux longitudinaux qui s'étendent entre lesdits embouts et y sont fixés de façon à consolider l'assemblage combustible en une structure unitaire monobloc, lesdits organes structuraux étant soumis à un effort axial qui leur est transmis par l'intermédiaire de la structure unitaire de l'assemblage combustible lorsqu'elle est placée dans le coeur du réacteur, et au moins quelques-uns desdits organes structuraux comprenant chacun un tube creux allongé de gainage et des moyens assujettis aux extrémités opposées de ce tube destinés à fermer ce tube d'une manière hermétique et à le fixer aux embouts supérieur et inférieur, caractérisé en ce que ledit tube (30) de gainage contient une quantité de matériaux (50) résistant au fluage, et des moyens (52; 60) de mise en pré-traction destinés à exercer une force de compression prédéterminée sur ledit matériau (50) résistant au fluage et à susciter une réaction à ladite force de manière à précontraindre ledit tube (30) de gainage en un état de pré-traction d'une grandeur suffisante pour neutraliser pratiquement ledit effort axial et diminuer de ce fait la contrainte de compression régnant dans ledit tube (30) de gainage.

2. Assemblage combustible selon la revendication 1, caractérisé en ce que ledit matériau (50) résistant au fluage est un matériau céramique se présentant sous la forme de pastilles.

3. Assemblage combustible selon la revendication 2, caractérisé en ce que ledit matériau céramique (50) est du bioxyde de zirconium.

4. Assemblage combustible selon la revendication 2 ou la revendication 3, caractérisé en ce que ledit matériau céramique (50) est revêtu d'un matériau absorbeur ayant la faculté de brûler.

5. Assemblage combustible selon la revendication 1, 2, 3 ou 4, caractérisé en ce que lesdits moyens de mise en prétraction sont constitués par un dispositif allongé (52) du type en soufflet positionné à l'intérieur du tube (30) de gainage entre une extrémité de ce dernier et ledit matériau (50) résistant au fluage, ledit dispositif (52) du type en soufflet étant pressurisé intérieurement de façon à créer un effort axial prédéterminé qui met en compression ledit matériau (50) résistant au fluage et met le tube (30) en ledit état de pré-traction.

6. Assemblage combustible selon la revendication 1, 2, 3 ou 4, caractérisé en ce que lesdits moyens de mise en pré-traction comprennent un agencement de rondelles Belleville (60) positionnées à l'intérieur du tube (30) de gainage entre une extrémité de ce dernier et ledit matériau (50) résistant au fluage de façon à créer un effort axial prédéterminé qui met en compression ledit matériau (50) résistant au fluage et met ledit tube (30) en ledit état de pré-traction.

7. Assemblage combustible selon la revendication 6, caractérisé en ce que lesdites rondelles Belleville (60) situées dans ledit agencement de ces dernières sont empilées en parallèles et en série.

8. Assemblage combustible selon l'une quel- conque des revendications précédentes caracté- risé en ce que le tube (30) de gainage est pressu- risé intérieurement.

FIG. 1

FIG. 2

FIG. 3

LOAD STRESS DIAGRAM

FIG. 4

LOAD
(COMPRESSIVE)

σ=0

120 lb.
LOAD

PRETENSIONED

NOT PRETENSIONED

σ-STRESS-TENSILE

σ-STRESS-COMPRESSIVE

O

O

EP 0 206 162 B1